# EUROPÄISCHE PATENTANMELDUNG

(11) **EP 3 079 028 A1**
(43) Veröffentlichungstag der Anmeldung: **12.10.2016**
(21) Anmeldenummer: 15162825.2
(22) Anmeldetag: 08.04.2015
(51) Int. Cl.: G05B 19/418, G05B 17/02, G06F 21/55, H04L 29/06

(54) **PLANUNGS- UND ENGINEERING-VERFAHREN, -SOFTWARE-TOOL UND SIMULATIONSWERKZEUG FÜR EINE AUTOMATISIERUNGSLÖSUNG**

(71) Anmelder: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Palmin, Anna, 76187 Karlsruhe (DE); Wolf, Gerrit, 76187 Karlsruhe (DE)

(57) **Zusammenfassung**

Im Rahmen der Planung und des Engineerings einer Automatisierungslösung, die ein Automatisierungssystem und eine prozesstechnische Anlage umfasst, werden Objekte, die die Komponenten der projektierten Automatisierungslösung repräsentieren, mittels eines Simulationswerkzeugs importiert, um die Automatisierungslösung anhand von den importierten Objekten zugeordneten Simulationsmodellen zu simulieren.

In den die Hardware-Komponenten des Automatisierungssystems repräsentierenden Objekten enthaltene Attribute, welche von den Komponenten generierbare IT-sicherheitsrelevante Ereignisse (Security Events) beschreiben, werden in die zugeordneten Simulationsmodelle übernommen, um bei der Simulation der Automatisierungslösung sicherheitsrelevante Ereignisse simulativ zu generieren, an ein Security Information Event Management-(SIEM)-System zur Auswertung zu übertragen und von dem SIEM-System erzeugte Ergebnisse der Auswertung für die Simulation der Automatisierungslösung zu verwenden.

## Beschreibung

Die Erfindung betrifft gemäß dem Oberbegriff des Anspruchs 1 ein Planungs- und Engineering-Verfahren für eine Automatisierungslösung, die ein Automatisierungssystem und eine prozesstechnische Anlage umfasst, wobei beim Projektieren und Konfigurieren der Automatisierungslösung mittels eines Engineeringwerkzeuges erstellte und verknüpfte Objekte, welche bedien- und beobachtbare Komponenten der Anlage und Hardware-Komponenten des Automatisierungssystems repräsentieren, von einem Simulationswerkzeug importiert werden und die Automatisierungslösung anhand von Simulationsmodellen, welche den importierten Objekten zugeordnet werden, simuliert wird.

Die Erfindung betrifft ferner ein Planungs- und Engineering-Software-Tool nach dem Oberbegriff des Anspruchs 4, ein Simulationswerkzeug nach dem Oberbegriff des Anspruchs 7 sowie ein das Planungs- und Engineering-Software-Tool beinhaltendes Planungs- und Engineering-System und ein Automatisierungssystem mit einem solchen Planungs- und Engineering-System.

Die Automatisierungstechnik dient der Automatisierung von technischen Prozessen. Das automatisierte Gesamtsystem besteht aus einem technischen System (Anlage), in dem der Prozess abläuft, einem Automatisierungssystem und Bedienpersonal. Bei dem automatisierten Prozess kann es sich beispielsweise um einen verfahrens- oder fertigungstechnischen Prozess oder einen Prozess zur Erzeugung oder Verteilung elektrischer Energie handeln.

Zur Planung und Projektierung einer Automatisierungslösung wird in einem Planungs- und Engineering-System mittels eines entsprechenden Software-Tools üblicherweise in einem ersten Schritt die Struktur der Anlage erfasst und mittels eines Anlagenplanungswerkzeugs ein Fließschema der Anlage durch Verknüpfung von grafischen Prozessobjekten erstellt. Die Prozessobjekte repräsentieren die bedien- und beobachtbaren Einrichtungen der Anlage wie z. B. Sensoren, Motoren, Pumpen, Ventile, Dosierer und Regler. Im Weiteren werden, ebenfalls unter Verwendung von grafischen Objekten, die Hardware-Komponenten des Automatisierungssystems wie z. B. Automatisierungsgeräte (Controller), Kommunikationskomponenten, Ein-/ Ausgabebaugruppen und Feldgeräte sowie die Kommunikationsbeziehungen zwischen diesen Komponenten konfiguriert und parametriert.

Die grafischen Objekte sind zumeist als standardisierte Bausteine in Bibliotheken enthalten und werden mittels geeigneter Editoren auf Projektierungsoberflächen nach technologischen bzw. automatisierungstechnischen Gesichtspunkten platziert und miteinander verschaltet.

Um feststellen zu können, ob das Engineering der Automatisierungslösung erfolgreich war oder um es zu optimieren, können in einem separaten Testwerkzeug Testbedingungen festgelegt und in einem Simulationswerkzeug eine Simulation der Automatisierungslösung unter den Testbedingungen durchgeführt werden. Dabei wird die Automatisierungslösung in einer simulierten Umgebung ganz oder teilweise durch Simulationsmodelle der involvierten Objekte virtuell nachgebildet. Das Simulationswerkzeug erzeugt Signale zu möglichen Ereignissen und Szenarien, die während des Betriebs der Anlage auftreten können. Ein derartiges Simulationswerkzeug ist beispielsweise unter der Bezeichnung SIMIT der Siemens AG bekannt.

Die erwähnten Anlagenplanungs-, Engineering-, Test- und Simulations-Werkzeuge können einzeln oder kombiniert ausgebildet sein.

Industrielle Automatisierungssysteme haben sich zunehmend von ursprünglich proprietären, isolierten Systemen zu offenen Architekturen und Standardtechnologien entwickelt. Dies hat dazu geführt, dass auch die Automatisierung von Prozessen in Industrieanlagen einen sicherheitskritischen IT-Komplex darstellt und die Anfälligkeit gegenüber Cyberangriffen zugenommen hat.

Die künftige Norm ISA99/IEC 62443 befasst sich mit der IT-Sicherheit sogenannter "Industrial Automation and Control Systems" (IACS). Der Begriff IACS umfasst alle Bestandteile, die für den zuverlässigen und sicheren Betrieb einer automatisierten Produktionsanlage erforderlich sind. Das sind auf der einen Seite die vernetzten Hardware-Komponenten der Automatisierungslösung, wie z. B. Steuerungen, Firewalls, Gateways, Switches, SCADA-Systeme oder PC-basierte Stationen. Der zweite Aspekt eines IACS schließt aber auch die organisatorischen Prozesse für einen sicheren Betrieb der Anlage ein. Dazu gehören die Prozessbedienung, interne Verantwortungsketten und Eskalationsprozesse, ebenso wie Schulungen für den sicheren Betrieb.

Einen wichtigen Beitrag zum ganzheitlichen Schutz von Automatisierungskomponenten, -systemen und -anlagen gegen unberechtigte Zugriffe liefern neben den typischen Schutzmechanismen wie z. B. Firewalls oder Virtual Private Networks (VPN) Werkzeuge zur proaktiven Erkennung von Angriffen und weiteren sicherheitsrelevanten Abweichungen von einem Normalzustand bzw. -verhalten, wie z. B. die sogenannten SIEM-Systeme (SIEM = Security Information Event Management).

Ein SIEM-System vereint in der Regel die beiden folgenden grundlegenden Funktionalitäten:

Das Security Event Management (SEM) sammelt in Echtzeit sicherheitsrelevante Ereignisse (Security Events), wertet diese unter Verwendung von Korrelationen aus und stellt sie auf einer SIEM-Konsole in einem Dashboard strukturiert dar. Das Ziel der Auswertung besteht darin, aus einzelnen oder einem Muster von mehreren Ereignissen zu erkennen, ob ein Hinweis auf einen Angriff bzw. eine Verletzung der in einer Anlage umgesetzten Datensicherheitsbestimmungen (Security Policies) vorliegt. In diesem Fall wird ein Alarm generiert und über das Netzwerk oder über weitere Kommunikationskanäle wie z. B. E-Mail oder SMS an eine geeignete Stelle, z. B. an eine Bedienstation (Operator Station), gemeldet.

Das Security Information Management (SIM) dient der Langzeitarchivierung von erfassten sicherheitsrelevanten Ereignissen, um eine nachträgliche Analyse zu ermöglichen, und zur Erzeugung von Berichten, um das Einhalten von Sicherheitsrichtlinien und regulatorischen Vorgaben nachzuweisen.

Die Erstellung von Korrelationsregeln in dem in einer Automatisierungsanlage eingesetzten SIEM-System hängt stark von der anlagenspezifischen Netzwerktopologie (u. a. der Netzwerksegmentierung und den Kommunikationsbeziehungen zwischen einzelnen Komponenten des Automatisierungssystems) und den von den eingesetzten Komponenten jeweils generierbaren sicherheitsrelevanten Ereignissen ab. Es handelt sich um sehr komplexe Systeme aus Regeln und Ereignissen, deren Verhalten und Auswirkungen auf das Gesamtverhalten der Anlage nur schwer vorhersagbar sind. Der Implementierungsaufwand ist sehr hoch und das Testen auf volle Funktion und Abdeckung nur schwer zu realisieren.

Einzelne kommerzielle SIEM-Systeme beinhalten die Funktionalität, als Reaktion auf ein erkanntes Sicherheitsrisiko oder eine Bedrohung (z. B. ein Brute-Force-Angriff oder eine unerlaubte CPU-Schutzstufenänderung) außer der oben bereits erwähnten Alarmierung weitere Aktionen auszuführen, wie z. B. das Ausführen einer Batchdatei, die beispielsweise einen Port schließt, oder die Änderung der Konfiguration einer Komponente des Automatisierungssystems.

Beim Einsatz eines SIEM-Systems in einer industriellen Anlage wird jedoch in der Regel auf die aktive Nutzung einer solchen erweiterten Funktionalität verzichtet, weil die von dem SIEM-System angestoßene Aktion den Normalbetrieb der Anlage negativ beeinflussen und möglicherweise zu Gefährdungen des Prozesses und von Menschenleben führen kann. Die verbleibende Alarmierung überlässt dagegen dem Anlagenbediener, -administrator oder IT-Spezialist die Entscheidung für eine angemessene Reaktion auf das jeweils aktuelle Sicherheitsproblem. Geeignete Aktionen des Anlagenbedieners und das daraus resultierende Verhalten der Anlage können jedoch aufgrund der Komplexität erst im Betrieb der Anlage ermittelt und optimiert werden. Damit besteht die Gefahr, dass Fehler in dem geplanten Regelwerk zur Reaktion auf kritische Sicherheitsvorfälle nicht erkannt oder unglückliche Aktionen des Bedienpersonals nicht verhindert werden können. Ein Testen des Systems im Kontext der Gesamtanlage und der Anlagenführung ist nur unzureichend möglich.

Der Erfindung liegt daher die Aufgabe zugrunde, aus einem SIEM-System heraus anlagenspezifische Aktionen als Reaktion auf erkannte anlagenspezifische Abweichungen von dem Normalzustand bzw. -verhalten zu ermöglichen, ohne dass der normale Betrieb der Anlage dadurch negativ beeinflusst wird.

Gemäß der Erfindung wird dies durch das in Anspruch 1 definierte Planungs- und Engineering-Verfahren, das Planungs- und Engineering-Software-Tool gemäß Anspruch 4 und das Simulationswerkzeug nach dem Oberbegriff des Anspruchs 7 gelöst.

Gegenstand der Erfindung ist weiterhin das Planungs- und Engineering-System nach Anspruch 8 und das Automatisierungssystem nach Anspruch 9.

Vorteilhafte Weiterbildungen der Erfindung sind in den Unteransprüchen angegeben.

Bei dem eingangs genannten Planungs- und Engineering-Verfahren werden in den die Hardware-Komponenten repräsentierenden Objekten enthaltene Attribute, welche von den Hardware-Komponenten des Automatisierungssystems generierbare sicherheitsrelevante Ereignisse beschreiben, in die zugeordneten Simulationsmodelle des Simulationswerkzeugs übernommen. Durch die den importierten Objekten der Hardware-Komponenten zugeordneten Simulationsmodelle werden sicherheitsrelevante Ereignisse simulativ generiert und an ein SIEM-System zur Auswertung übertragen. Von dem SIEM-System erzeugte Ergebnisse der Auswertung werden von dem Simulationswerkzeug für die Simulation der Automatisierungslösung verwendet.

Durch die Erweiterung der Simulationsmodelle um die Fähigkeit, sicherheitsrelevante Ereignisse simulativ zu generieren, und durch die Kopplung des Simulationswerkzeugs an ein sicherheitsrelevante Ereignisse anhand von SIEM-Korrelationsregeln auswertendes SIEM-System ist es erstmals möglich, die sicherheitsrelevanten Ereignisse, SIEM-Korrelationsregeln und deren Auswirkungen zu testen und zu verifizieren.

Die SIEM-Korrelationsregeln können in vorteilhafter Weise mittels eines Engineeringwerkzeugs projektiert und in das SIEM-System übertragen werden. Zusammen mit den Objekten, die die bedien- und beobachtbaren Komponenten der Anlage und Hardware-Komponenten des Automatisierungssystems repräsentieren, werden die Eigenschaften und Parameter dieser Komponenten in Bibliotheken des Engineeringwerkzeugs hinterlegt. Zu den Parametern gehören auch die von den Hardware-Komponenten generierbaren sicherheitsrelevanten Ereignisse, die durch Attribute beschrieben werden. Bei der Projektierung und Konfigurierung der Automatisierungslösung wird auf die Bibliothek zugegriffen; die benötigten Komponenten werden ausgewählt und in das Planungsprojekt eingefügt, wobei automatisch die dazugehörigen sicherheitsrelevanten Ereignisse in dem Planungsprojekt mit angelegt werden. Anschließend können anlagenspezifische SIEM-Korrelationsregeln für das Planungsprojekt entworfen werden, die auf den von den projektierten Komponenten generierbaren sicherheitsrelevanten Ereignissen basieren. Für die Erstellung der SIEM-Korrelationsregeln können grafische Methoden nach dem Vorbild eines aus Schritten und Übergängen (Transitionen) bestehenden Ablaufdiagramms verwendet werden. Tritt ein sicherheitsrelevantes Ereignis auf, so wird eine Transition ausgeführt und ein neuer Schritt erreicht, bei dem z. B. ein neues sicherheitsrelevantes Ereignis, welches wiederum in SIEM-Korrelationsregeln verwendet wird, erzeugt werden kann. Mit Hilfe der Modellierung der Korrelationsregeln über eine Ablaufbeschreibung lassen sich z. B. auch sequenzielle Ereignisse beschreiben. Bei Änderungen in der Anlagenplanung, z. B. dem Wegfall einer Komponente, können so Auswirkungen auf die sicherheitsrelevanten Ereignisse und die SIEM-Korrelationsregeln einfach ermittelt werden. Die Projektierung von SIEM-Korrelationsregeln wird also in die Projektierung der Automatisierungslösung integriert und ist damit anlagen- und automatisierungsspezifischer und effizienter als bisher.

So wie vorstehend für die SIEM-Korrelationsregeln beschrieben, können in vorteilhafter Weise auch anlagenspezifische Aktionen als Reaktion auf erkannte anlagenspezifische Abweichungen von dem Normalzustand bzw. -verhalten projektiert und in das SIEM-System übertragen werden. Das SIEM-System ist dann in der Lage, bei einem Angriff oder einer Verletzung der in einer Anlage umgesetzten Datensicherheitsbestimmungen über eine Alarmierung hinausgehende projektierte Aktionen anzustoßen. Durch die Kopplung des Simulationswerkzeugs an das SIEM-System ist es möglich, diese Aktionen und ihre Auswirkungen auf die Automatisierungslösung zu testen oder beispielsweise zum Zwecke der Schulung des Bedienpersonals realitätsnah zu simulieren.

Aus der oben beschriebenen Erfindung resultieren folgende Vorteile:
- Durch Einbindung in die Simulation von Automatisierungslösungen wird der Nutzen von SIEM-Systemen erhöht und zur Erfüllung von Sicherheitsanforderungen, wie der NAMUR-Anforderung "Security by Design", beigetragen.
- Durch die gleichzeitige Projektierung von Aktionen als Reaktion auf sicherheitsrelevante Ereignisse im Rahmen der Anlagenplanung unter Verwendung eines Planungswerkzeugs werden die Reaktionen auf die von einem SIEM-System erkannten Abweichungen viel anlagenspezifischer, automatisierungsspezifischer und effizienter als heute gestaltet.

- Durch die Verifikation der Wirksamkeit von anlagenspezifischen Aktionen als Reaktion auf sicherheitsrelevante Ereignisse unter Verwendung eines Simulationswerkzeugs und iterative Anpassungen im Bedarfsfall wird sichergestellt, dass automatisch ausgelöste Aktionen den Normalbetrieb einer Anlage nicht negativ beeinflussen. Somit entfällt insbesondere der Abstimmungs- und Entscheidungsaufwand nach dem Eintreten von sicherheitsrelevanten Ereignissen und Alarmen. Ferner wird das Risiko einer falschen Entscheidung minimiert.
- Es können IT-Sicherheitsaspekte berücksichtigt werden, die sich über mehrere Gewerke (Verfahrenstechnik, Automatisierung, Elektrotechnik, etc.) hinweg erstrecken.
- Schulung des Personals vor der Inbetriebnahme und kontinuierlich im Betrieb der Anlage an einem OTS-System unter Berücksichtigung von IT-Sicherheitsaspekten.
- Die Reaktion des SIEM-Systems kann aktiv das Leitsystem beeinflussen, was bisher aus Sicherheitsgründen nicht möglich ist. Durch die simulative Verifikation des SIEM-Systems kann die Determiniertheit des Anlagenverhaltens gewährleistet werden.

Im Weiteren wird die Erfindung anhand von Ausführungsbeispielen erläutert, wozu auf die Figuren der Zeichnung Bezug genommen wird; im Einzelnen zeigen:
Figur 1 ein Beispiel für eine Automatisierungslösung bestehend aus einer prozesstechnischen Anlage mit einem Automatisierungssystem und
Figur 2 ein vereinfachtes Beispiel für ein Objektmodell der Automatisierungslösung.

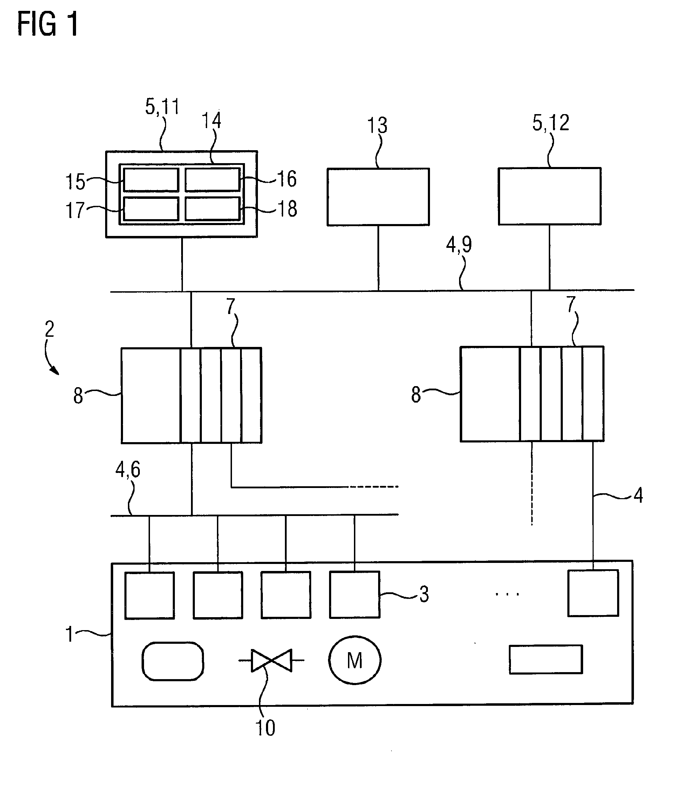

Figur 1 zeigt in vereinfachter schematischer Darstellung ein Beispiel für eine technische Anlage 1, in der ein Prozess abläuft und mittels eines Automatisierungssystems 2 gesteuert wird. Das Automatisierungssystem weist eine Vielzahl von prozessnahen Komponenten (Feldgeräte) 3 auf, die auf Feldebene, also in dem Prozess, vorgegebene Mess-, Steuer- und Regelungsfunktionen wahrnehmen und dabei insbesondere Messgrößen aus dem Prozess erfassen und durch Stelleingriffe auf den Prozess einwirken. Bei den Feldgeräten 3 kann es sich um Sensoren, Aktoren, Messumformer, Analysengeräte, Antriebe usw. handeln. Die Feldgeräte 3 tauschen über ein in der Regel drahtgebundenes Kommunikationssystem 4 prozess-, funktions-und/oder geräterelevante Daten untereinander und mit Rechnersystemen 5 in einer Leit- und Planungsebene aus, wozu die Feldgeräte 3, z. B. über einen Feldbus 6, an Ein- und Ausgabe-Baugruppen 7 von Automatisierungsgeräten 8, z. B. speicherprogrammierbaren Steuerungen (SPS), angeschlossen sind, welche wiederum einzeln oder über einen zentralen Anlagenbus 9 mit den übergeordneten Rechnersystemen 5 verbunden sind.

Die Feldgeräte 3, Automatisierungsgeräte 8, Ein- und AusgabeBaugruppen 7 und weitere, hier nicht gezeigte Komponenten wie z. B. Kommunikationskomponenten, stellen Hardware-Komponenten des Automatisierungssystems 2 dar. Die Feldgeräte 3 selbst, wie beispielsweise Messumformer, können auch bedien- und beobachtbare Komponenten der Anlage 1 darstellen, zu denen z. B. Ventile 10, Dosierer, Waagen oder aber auch Gruppen solcher Einrichtungen gehören, die in einem engeren prozesstechnischen Zusammenhang stehen, wie z. B. die Trockengruppe einer Papiermaschine oder die Kühlstrecke einer Stranggussanlage.

Die Rechnersysteme 5 umfassen ein Planungs- und Engineering-System 11, ein Bedien- und Beobachtungssystem 12 und ein SIEM-System 13. Das Planungs- und Engineering-System 11 enthält ein Planungs- und Engineering-Software-Tool 14, das aus unterschiedlichen Software-Werkzeugen, hier einem Planungswerkzeug 15, einem Engineeringwerkzeug 16, einem Simulationswerkzeug 17 und einem Testwerkzeug 18 besteht. In Figur 1 ist das Software-Tool 14 zur besseren Anschaulichkeit als ein Block auf einer Engineering-Station dargestellt. Das ist nicht so zu verstehen, dass das Software-Tool 14 nur auf einer Recheneinheit ablaufen kann; selbstverständlich kann es auf verschiedenen Recheneinheiten verteilt sein. Auch können die Software-Werkzeuge 15, 16, 17, 18 einzeln oder kombiniert ausgebildet sein.

Mittels des Anlagenplanungswerkzeugs 15 und des Engineeringwerkzeugs 16 wird ein Fließschema der Anlage durch Verknüpfung von grafischen Prozessobjekten erstellt, welche die bedien- und beobachtbaren Einrichtungen der Anlage 1 repräsentieren, und werden im Weiteren die ebenfalls durch Objekte repräsentierten Hardware-Komponenten des Automatisierungssystems sowie ihre Kommunikationsbeziehungen konfiguriert und parametriert.

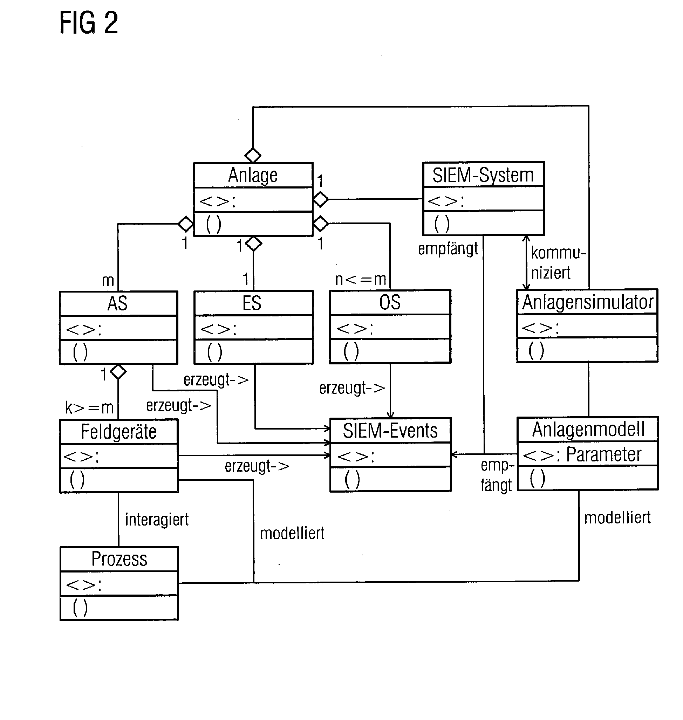

Figur 2 zeigt ein vereinfachtes Beispiel für ein Objektmodell der Automatisierungslösung, in der das SIEM-System 13 zur Anwendung kommt. Abweichend von der bisherigen Notation ist hier die Automatisierungslösung als Anlage bezeichnet. Die Anlage besteht aus einer Engineering Station ES (mit dem in Figur 1 gezeigten Planungs- und Engineering-Software-Tool 14) für die Projektierung der Anlage, Operator Stations OS (entsprechend dem Bedien- und Beobachtungssystem 12) für das Bedienen und Beobachten der Anlage und Automatisierungen AS (mit den Hardware-Komponenten des Automatisierungssystems 2), die den technischen Prozess regeln bzw. steuern. Den Automatisierungen sind u. a. die Feldgeräte unterlagert, mit deren Hilfe Prozesswerte erfasst und geregelt werden können. AS, ES, OS und Feldgeräte können sicherheitsrelevante Ereignisse (SIEM-Events) generieren, welche durch ein SIEM-System empfangen werden. Das SIEM-System entscheidet auf Basis von Korrelationsregeln, welche Aktionen als Reaktion auf SIEM-Events erfolgen.

Um die Anlage (Automatisierungslösung) in einer simulativen Umgebung testen zu können, wird ein Anlagensimulator (entsprechend dem Simulationswerkzeug 17 in Figur 1, z. B. Siemens SIMIT) verwendet, mit dessen Hilfe die Anlage, also der Prozess und die Hardware-Komponenten des Automatisierungssystems 2, darunter die mit dem Prozess interagierenden Feldgeräte in Form eines Anlagenmodells, virtualisiert wird. ES und OS sind weitestgehend von der Simulation unbeeinflusst. Um neben der Automatisierung auch die Verarbeitung der SIEM-Events, die daraus resultierenden Aktionen und die damit verknüpften Reaktionen der Anlage testen zu können, werden, wie hier am Beispiel der Feldgeräte gezeigt, die Simulationsmodelle der Hardware-Komponenten des Automatisierungssystems um die Fähigkeit der Generierung der SIEM-Events in der simulierten Umgebung erweitert. Darüber hinaus werden die im Simulator laufenden Simulationsmodelle um die Fähigkeit erweitert, SIEM-Events zu empfangen und diese über eine Kopplung an das SIEM-System zu übertragen. Neben der Übertragung von SIEM-Events vom Anlagensimulator zum SIEM-System, können durch den Anlagensimulator auch die Aktionen des SIEM-Systems als Reaktion auf die erhaltenen simulierten SIEM-Events empfangen und verarbeitet werden. Die Verarbeitung von SIEM-Aktionen im Anlagensimulator beinhaltet die Verifikation der Aktionen, also ob das SIEM-System richtig auf die SIEM-Events reagiert hat, als auch eine entsprechende Visualisierung für Schulungszwecke.

## Patentansprüche

1. Planungs- und Engineering-Verfahren für eine Automatisierungslösung, die ein Automatisierungssystem und eine prozesstechnische Anlage umfasst, wobei beim Projektieren und Konfigurieren der Automatisierungslösung mittels eines Engineeringwerkzeuges erstellte und verknüpfte Objekte, welche bedien- und beobachtbare Komponenten der Anlage und Hardware-Komponenten des Automatisierungssystems repräsentieren, von einem Simulationswerkzeug importiert werden und die Automatisierungslösung anhand von Simulationsmodellen, welche den importierten Objekten zugeordnet werden, simuliert wird, **dadurch gekennzeichnet,**
**dass** in den die Hardware-Komponenten repräsentierenden Objekten enthaltene Attribute, welche von den Hardware-Komponenten des Automatisierungssystems generierbare sicherheitsrelevante Ereignisse (Security Events) beschreiben, in die zugeordneten Simulationsmodelle übernommen werden,
**dass** durch die den importierten Objekten der Hardware-Komponenten zugeordneten Simulationsmodelle sicherheitsrelevante Ereignisse simulativ generiert und an ein Security Information Event Management-(SIEM)-System zur Auswertung übertragen werden und
**dass** von dem SIEM-System erzeugte Ergebnisse der Auswertung von dem Simulationswerkzeug für die Simulation der Automatisierungslösung verwendet werden.

2. Planungs- und Engineering-Verfahren nach Anspruch 1, **dadurch gekennzeichnet, dass** mittels eines Engineeringwerkzeugs Korrelationsregeln für die Auswertung der sicherheitsrelevanten Ereignisse projektiert und in das SIEM-System übertragen werden.

3. Planungs- und Engineering-Verfahren nach Anspruch 1 oder 2, **dadurch gekennzeichnet, dass** mittels eines Engineeringwerkzeugs Aktionen als Reaktionen auf unterschiedliche Ergebnisse der Auswertung sicherheitsrelevanter Ereignisse projektiert und in das SIEM-System übertragen werden und dass von dem SIEM-System in Abhängigkeit von dem Ergebnis der Auswertung simulierter sicherheitsrelevanter Ereignisse ausgewählte Aktionen von dem Simulationswerkzeug für die Simulation der Automatisierungslösung verwendet werden.

4. Planungs- und Engineering-Software-Tool für eine Automatisierungslösung, die ein Automatisierungssystem und eine prozesstechnische Anlage umfasst,
mit einem Engineeringwerkzeug, das zum Projektieren und Konfigurieren der Automatisierungslösung durch Erstellen und Verknüpfen von Objekten ausgebildet ist, welche bedien- und beobachtbare Komponenten der Anlage und Hardware-Komponenten des Automatisierungssystems repräsentieren, und
mit einem Simulationswerkzeug, das zum Import der Objekte und zur Simulation der Automatisierungslösung anhand von den importierten Objekten zugeordneten Simulationsmodellen ausgebildet ist,
**dadurch gekennzeichnet,**
**dass** das Engineeringwerkzeug ferner dazu ausgebildet ist, den die Hardware-Komponenten repräsentierenden Objekten Attribute zuzuordnen, welche von den Hardware-Komponenten des Automatisierungssystems generierbare sicherheitsrelevante Ereignisse (Security Events) beschreiben, und
**dass** das Simulationswerkzeug ferner dazu ausgebildet ist, die Attribute beim Import der Objekte in die zugehörigen Simulationsmodelle zu übernehmen, sicherheitsrelevante Ereignisse simulativ zu generieren, an ein Security Information Event Management-(SIEM)-System zur Auswertung zu übertragen und von dem SIEM-System erzeugte Ergebnisse der Auswertung für die Simulation der Automatisierungslösung zu verwenden.

5. Planungs- und Engineering-Software-Tool nach Anspruch 4, **dadurch gekennzeichnet, dass** das Engineeringwerkzeug für die Projektierung von Korrelationsregeln zur Auswertung der sicherheitsrelevanten Ereignisse und zur Übertragung der projektierten Korrelationsregeln in das SIEM-System ausgebildet ist.

6. Planungs- und Engineering-Software-Tool nach Anspruch 4 oder 5, **dadurch gekennzeichnet,**
**dass** das Engineeringwerkzeug für die Projektierung von Aktionen als Reaktionen auf unterschiedliche Ergebnisse der Auswertung sicherheitsrelevanter Ereignisse und zur Übertragung der projektierten Aktionen in das SIEM-System ausgebildet ist und
**dass** das Simulationswerkzeug dazu ausgebildet ist, Aktionen, die von dem SIEM-System in Abhängigkeit von dem Ergebnis der Auswertung simulierter sicherheitsrelevanter Ereignisse ausgewählt werden, für die Simulation der Automatisierungslösung zu verwenden.

7. Simulationswerkzeug für eine Automatisierungslösung, die ein Automatisierungssystem und eine prozesstechnische Anlage umfasst, das dazu ausgebildet ist, beim Projektieren und Konfigurieren der Automatisierungslösung mittels eines Engineeringwerkzeuges erstellte und verknüpfte Objekte, welche bedien- und beobachtbare Komponenten der Anlage und Hardware-Komponenten des Automatisierungssystems repräsentieren, zu importieren und die Automatisierungslösung oder einen Teil davon anhand von Simulationsmodellen, welche den importierten Objekten zugeordnet sind, zu simulieren,
**dadurch gekennzeichnet,**
**dass** das Simulationswerkzeug ferner dazu ausgebildet ist, in den die Hardware-Komponenten repräsentierenden Objekten enthaltene Attribute, welche von den Hardware-Komponenten des Automatisierungssystems generierbare sicherheitsrelevante Ereignisse (Security Events) beschreiben, in die zugeordneten Simulationsmodelle zu übernehmen, sicherheitsrelevante Ereignisse simulativ zu generieren, an ein Security Information Event Management-(SIEM)-System zur Auswertung zu übertragen und von dem SIEM-System erzeugte Ergebnisse der Auswertung für die Simulation der Automatisierungslösung zu verwenden.

8. Planungs- und Engineering-System für eine Automatisierungslösung beinhaltend ein Planungs- und Engineering-Software-Tool nach einem der Ansprüche 4 bis 6.

9. Automatisierungssystem für eine prozesstechnische Anlage mit einem Planungs- und Engineering-System nach Anspruch 8.

## Geänderte Patentansprüche

### Geänderte Patentansprüche gemäss Regel 137(2) EPÜ.

**6.** Planungs- und Engineering-Software-Tool nach Anspruch 4 oder 5, **dadurch gekennzeichnet,**
**dass** das Engineeringwerkzeug für die Projektierung von Aktionen als Reaktionen auf unterschiedliche Ergebnisse der Auswertung sicherheitsrelevanter Ereignisse und zur Übertragung der projektierten Aktionen in das SIEM-System ausgebildet ist und
**dass** das Simulationswerkzeug dazu ausgebildet ist, Aktionen, die von dem SIEM-System in Abhängigkeit von dem Ergebnis der Auswertung simulierter sicherheitsrelevanter Ereignisse ausgewählt werden, für die Simulation der Automatisierungslösung zu verwenden.

**7.** Planungs- und Engineering-System für eine Automatisierungslösung beinhaltend ein Planungs- und Engineering-Software-Tool nach einem der Ansprüche 4 bis 6.

**8.** Automatisierungssystem für eine prozesstechnische Anlage mit einem Planungs- und Engineering-System nach Anspruch 7.
